# EUROPÄISCHE PATENTSCHRIFT

(11) **EP 1 306 239 B1**
(45) Veröffentlichungstag und Bekanntmachung des Hinweises auf die Patenterteilung: **06.08.2008**
(21) Anmeldenummer: 02018423.0
(22) Anmeldetag: 16.08.2002
(51) Int. Cl.: B60G 17/052, F04B 39/00, F01N 7/16

(54) **Luftversorgungsaggregat für ein Fahrzeug**
Air supply unit for a vehicle
Unité d'alimentation d'air pour un véhicule

(30) Priorität: 25.10.2001 DE 10152153
(43) Veröffentlichungstag der Anmeldung: 02.05.2003
(73) Patentinhaber: Continental Aktiengesellschaft, 30165 Hannover (DE)
(72) Erfinder: Wang, Xu, Dr., 30823 Garbsen (DE)

(56) Entgegenhaltungen:
- WO-A-93/05970
- DE-A- 2 134 178
- GB-A- 471 431
- GB-A- 968 347
- US-A- 3 187 837
- US-A- 4 239 461
- US-A- 4 915 594
- PATENT ABSTRACTS OF JAPAN Bd. 0010, Nr. 60 (M-021), 10. Juni 1977 (1977-06-10) -& JP 52 008506 A (HITACHI LTD), 22. Januar 1977 (1977-01-22)

## Beschreibung

Die Erfindung betrifft ein Luftversorgungsaggregat für ein Fahrzeug mit pneumatischen Einrichtungen, insb. mit Luftfedern, das einen Kompressor und einen Schalldämpfer enthält.

Aus der DE 198 35 491 A1 ist eine pneumatische Einrichtung für ein Fahrzeug in Form einer Niveauregelanlage bekannt, die Luftfedern aufweist. Bei derartigen Niveauregelanlagen muß z.B. zur Niveauregulierung des Fahrzeuges Luft aus den Luftfedern abgelassen oder mittels des Kompressors aufgefüllt werden, wobei die Luft üblicherweise über einen Lufttrockner geführt wird. Vor allem das Ablassen der Luft ist mit lauter, unangenehmer Geräuschentwicklung verbunden. Es besteht daher das Bedürfnis, derartige Niveuaregelanlagen mit Schalldämpfern auszustatten.

Aus der WO93/05970 ist eine Luftversorgungsaggregat mit zwei Schalldämpfern bekannt. Der erste Schalldämpfer ist mit dem Kompressoreinlass verbunden. Der zweite Schalldämpfer ist an dem Auslassventil des Ventilblocks angeordnet.

Bei einem Luftversorgungsaggregat, das aus der nachveröffentlichten der DE 101 21 582 bekannt ist, weist der Schalldämpfer mehrere hintereinander angeordnete Kammern auf, die über sich diffusorartig verengende Kanäle miteinander verbunden sind. Weiterhin sind poröse Platten z.B. aus Sinterwerkstoff mit einer Vielzahl feiner Kanäle vorgesehen, durch die die Luft hindurchgeletet wird. Mit diesem Luftversorgungsaggregat konnte bereits eine deutliche Schallreduzierung erreicht werden. Der Schalldämpfer weist jedoch den Nachteil auf, dass er einen gewissen Mindestdurchmesser und eine Mindestlänge benötigt. Bei vielen modernen Fahrzeugen ist der Einbauraum so beengt, dass der Schalldämpfer aufgrund seines Volumens schwer unterzubringen ist. Zudem ist die Herstellung des Schalldämpfers aufwändig, da er in seinem Inneren eine komplizierte Struktur aufweist und aus einer Vielzahl von Einzelteilen, wie den Diffusoren, zusammengesetzt ist.

Der Erfindung liegt daher die Aufgabe zugrunde, ein Luftversorgungsaggregat der eingangs genannten Art zur Verfügung zu stellen, das einen Schalldämpfer aufweist, der auch bei sehr beengten Verhältnissen im Fahrzeug eingebaut werden kann und auf einfache Weise herstellbar ist.

Diese Aufgabe wird erfindungsgemäß dadurch gelöst, dass der Schalldämpfer aus einem oder mehreren Schläuchen aus Gummi oder einem gummiähnlichen Werkstoff besteht und durch Drosselstellen in seinem Inneren in mehrere Kammern unterteilt ist.

Im Gegensatz zu bisher bekannten Schalldämpfern verzichtet man bei dieser Form auf Prallplatten, Sinterscheiben, Schaumfüllungen u.ä., die dem ungehinderten Luftablaß und dem ungehinderten Luftansaugen im Wege stehen. Somit ist das Ablaßgeräusch des Luftversorgungsaggregates nicht wesentlich länger als bei einem Luftversorgungsaggregat ganz ohne Schalldämpfer. Außerdem ist der auftretende Widerstand, den der Kompressor beim Ansaugen und Ablassen überwinden muß, wesentlich geringer als bei herkömmlichen Schalldämpfern.

Der Schalldämpfer ist ein Luftablaßschlauch, der kein eigenes Gehäuse notwendig macht. Das Platzproblem, das bei Dämpfungsmaßnahmen immer besteht, wird somit überwunden. Der Schlauch hat einen geringeren Durchmesser als bekannte Schalldämpfer. Aufgrund seiner Flexibilität kann er praktisch in beliebiger Weise im Fahrzeug verlegt sein. Somit kann der Schalldämpfer auch unter ungünstigen Umständen im Fahrzeug angeordnet sein. Der Schalldämpfer ist aus sehr einfachen Teilen aufgebaut. Sowohl seine Herstellung als auch seine Montage am Luftversorgungsaggregat sind in einfacher Weise möglich. Es kann auch auf standardmäßige, im Handel erhältliche Bauteile zurückgegriffen werden.

Der Schlauch kann z.B. im Spritzgießverfahren hergestellt werden, wobei durch Einlegen eines entsprechend gestalteten Kerns die Drosselstellen einstückig in den Schlauch eingeformt werden können. Diese Ausführungsform der Erfindung ist dann vorteilhaft, wenn der Schalldämpfer in großen Stückzahlen hergestellt werden soll. Der Schalldämpfer wird in einem Stück hergestellt, zusätzliche Arbeitsschritte, wie das Zusammensetzen von Einzelteilen, können entfallen. Nach einer anderen vorteilhaften Ausführungsform der Erfindung ist der Schalldämpfer aus mehreren Schlauchabschnitten zusammengesetzt, die durch Verbindungsstücke miteinander verbunden sind, wobei die Verbindungsstücke zusätzlich die Funktion von Drosselstellen übernehmen. Diese Ausführungsform der Erfindung ist dann besonders vorteilhaft, wenn der Schalldämpfer nur in geringeren Stückzahlen benötigt, da standardmäßige, nicht spezialisierte Einzelteile verwendet werden können.

Bei dem erfindungsgemäßen Luftversorgungsaggregat konnte durch den Schalldämpfer eine Reduzierung ders Ablaßgeräusches, aber auch des Einlaßgeräusches und von Klopfgeräuschen des Kompressors um mindestens 7 dBA erreicht werden. Die Schalldämpfung wird zum einen durch die Drosselstellen bewirkt, an denen die Schallenergie vor allem bei der kurzzeitigen, sehr intensiven Luftdurchströmung beim Luftablassen aus der Anlage verwirbelt und in Wärme umgewandelt wird. Zum anderen wirkt der weiche Werkstoff des Schlauches dämpfend. Bei dem erfindungsgemäßen Luftversorgungsaggregat konnte im Vergleich zu dem oben erwähnten bekannten Luftversorgungsaggregat, das einen aus harten Bauteilen bestehenden Schalldämpfer aufweist, nicht nur eine bessere Geräuschreduzierung erreicht werden, sondern das verbleibende Geräusch ist auch angenehmer und weniger hart. Eine hohe Qualität der Geräuschdämpfung kann durch geeignete Eigenschaften des Schlauchwerkstoffes erzielt werden. Es hat sich gezeigt, dass eine besonders gute Dämfung erreicht werden konnte, wenn der Schlauch eine Shore-Härte zwischen 70 und 80, vorzugsweise von etwa 75 (angegeben in Shore A) aufwies.

Als dritter wesentlicher Effekt zur Schallreduzierung wirken bei der Erfindung Reflexionen in den Kammern, die zu einer Auslöschung des Schalls durch phasenverschobene, reflektierte Schallwellen gleicher Frequenz führen. Um diesen Effekt optimal zu nutzen, sind bei einer vorteilhaften Ausführungsform der Erfindung die Kammern so ausgebildet, dass ihre Längen in einem ganzzahligen Verhältnis zu der Wellenlänge derjenigen Anteile des Schalls stehen, die vorrangig gedämpft werden sollen. Der Schalldämpfer kann somit durch die Wahl geeigneter Abmessungen optimiert werden, wobei diese Abmessungen jedoch abhängig von den zu dämpfenden Geräuschen und damit von den weiteren Komponenten des Luftversorgungsaggregates, insb. des Kompressors, sind. Weiterhin wird eine starke Reduzierung tiefer Frequenzen (bis ca. 1000 Hz) bewirkt, da sich diese Schallwellen nicht ausbreiten können, weil ihre Wellenlänge größer ist als die Abstände zwischen den Drosselstellen.

Nach einer vorteilhaften Ausführungsform der Erfindung besteht der Schalldämpfer aus einem Schlauch, in dem die Kammern hintereinander angeordnet sind, so dass sie von der Luft der Reihe nach durchströmt werden können. Eine derartige Ausführungsform der Erfindung hat den Vorteil, besonders einfach zu sein und einen besonders schlanken Schalldämpfer aufzuweisen.

Bei einer anderen vorteilhaften Ausführungsform der Erfindung weist der Schalldämpfer auf seinem mittleren Abschnitt zwei oder mehrere einander parallele Schläuche auf. Diese Ausführungsform hat den Vorteil einer besonders kurzen, kompakten Bauweise. Bei einem Schalldämpfer dieser Bauweise wird der Luftstrom in parallele Ströme aufgeteilt und nach einer gewissen Strecke wieder zusammengeführt. Die Schallwellen breiten sich in den parallelen Schläuchen aus und überlagern einander an den Stellen, wo sie wieder zusammengeführt werden, wobei es zur Auslöschung von phasenverschobenen Schallwellen gleicher Frequenz kommt. Bei diesem Schalldämpfer sind zwei oder mehr Kammern parallel zueinander angeordnet, wobei die Verzweigungsstellen auch gleichzeitig als Drosselstellen ausgebildet sein können. Dieser Schalldämpfer ist besonders gut in der oben beschriebenen Weise aus mehreren Schlauchabschnitten und Verbindungsstücken herzustellen, wobei die Verbindungsstücke Verzweigungen aufweisen.

Es liegt weiterhin im Rahmen der Erfindung, Schalldämpfer mit in Reihe liegenden und mit parallel geschalteten Kammern miteinander zu kombinieren.

Weitere Einzelheiten der Erfindung werden anhand der Zeichnung erläutert, in der Ausführungsbeispiele der Erfindung dargestellt sind. Es zeigen:
- Fig. 1: eine Niveauregelanlage für ein Fahrzeug mit einem erfindungsgemäß Luftversorgungsaggregat in schematischer Darstellung,
- Fig. 2: einen Schalldämpfer für das Luftversorgungsaggregat nach Fig. 1 im Längsschnitt,
- Fig. 3: eine gegenüber Fig. 2 abgewandelte Ausführungsform des Schalldämpfers im Längsschnitt und
- Fig. 4: eine weitere gegenüber Fig. 2 abgewandelte Ausführungsform des Schalldämpfers im Längsschnitt.

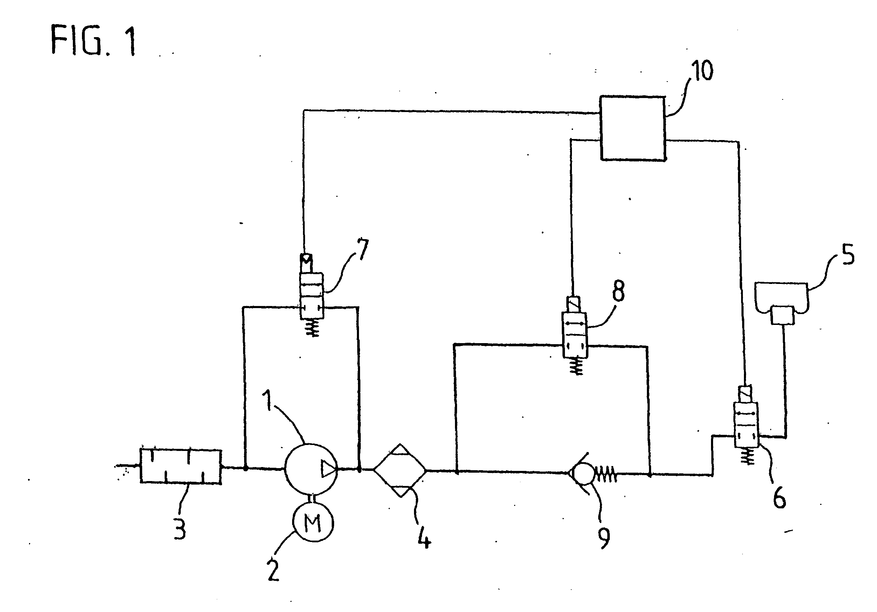

Fig. 1 zeigt eine Niveauregelanlage in vereinfachter Darstellung. Zu dem Luftversorgungsaggregat gehören ein Kompressor 1, der durch einen Motor 2 angetrieben werden kann, sowie ein Schalldämpfer 3 und ein Lufttrockner 4. Die pneumatischen Elemente, die durch das Luftversorgungsaggregat mit Luft versorgt werden sollen, sind Luftfedern 5, von denen in Fig. 1 der Einfachheit halber nur eine dargestellt ist. Den Luftfedern 5 sind jeweils Ventile 6 vorgeschaltet, über die die einzelnen Luftfedern 5 individuell angesteuert werden können. In der Anlage sind weitere Ventile 7 und 8 sowie ein Rückschlagventil 9 vorgesehen. Die Ventile 6, 7 und 8 werden elektromagnetisch betätigt. Sie können durch eine elektronische Steuereinheit 10 gesteuert werden.

Das Ablassen oder Ansaugen von Luft kann z.B. zur Niveauregelung eines Fahrzeuges mit Luftfederung dienen. Um die Druckluftanlage mit Luft aufzufüllen, saugt der Kompressor 1 Luft aus der Umgebung über den Schalldämpfer 3 an und fördert sie über den Lufttrockner 4 und das Rückschlagventil 9 über die in Durchgangsstellung befindlichen Ventile 6 zu den Luftfedern 5. Das Rückschlagventil 9 sorgt dafür, dass die Luft ungehindert in die Anlage aufgenommen, jedoch nur gesteuert über das Ventil 8 wieder abgelassen werden kann. Zum Ablassen von Luft aus der Anlage werden die Ventile 6, 7 und 8 geöffnet. Durch das Ventil 7 wird beim Ablassen im Luftversorgungsaggregat der Verdichter 1 umgangen. Die Luft durchströmt dann den Lufttrockner 4 und den Schalldämpfer 3 in umgekehrter Richtung und gelangt ins Freie. Durch diesen Aufbau der Anlage ist sichergestellt, dass sowohl beim Zuströmen von Luft zur Anlage als auch beim Ablassen von Luft aus der Anlage eine Schalldämpfung erfolgt. Zudem wird die Luft stets über den Lufttrockner 4 geführt, wobei sie beim Zuströmen in die Anlage getrocknet wird und beim Abströmen aus der Anlage die im Lufttrockner 4 zurückgehaltene Feuchtigkeit nach außen abgeführt wird.

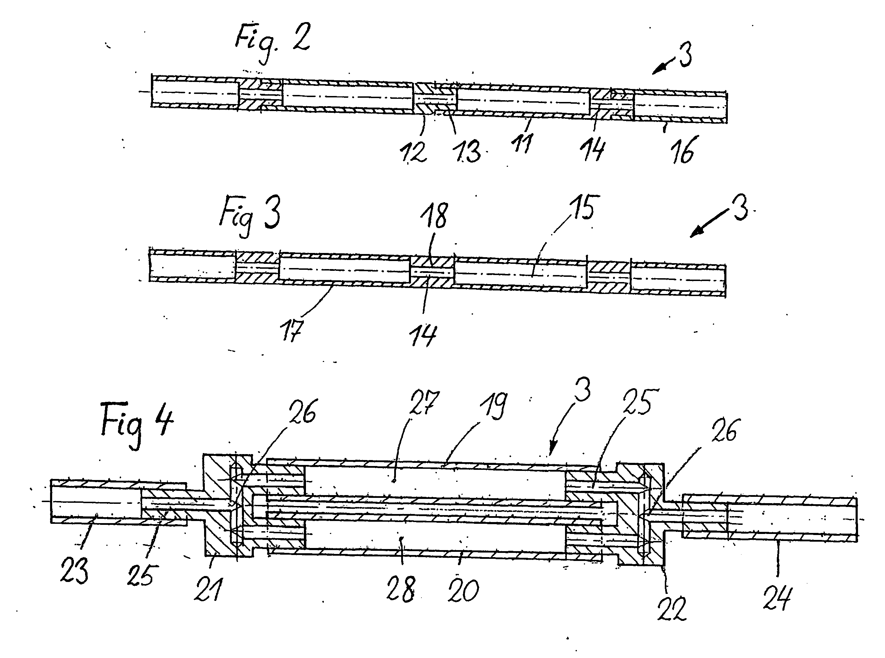

Der Schalldämpfer 3 wird nun anhand der Figuren 2 bis 4 näher erläutert werden. Der Schalldämpfer gemäß Fig. 2 besteht aus einzelnen zylindrischen Schlauchabschnitten 11 aus Gummi, z,B. aus NBR (Acrylnitril-Butadienn-Kautschuk) oder ACM (Acrylat-Elastomer) mit einer Shore-Härte 75. Die Schlauchabschnitte 11 sind an einem Ende offen und am anderen Ende mit Verbindungsstücken 12 versehen, die jeweils zum freien Ende hin einen Absatz 13 mit einem verringerten Durchmesser aufweisen, der in das offene Ende des benachbarten Schlauchabschittes 11 eingesetzt ist. Die Verbindungsstücke 12 sind an die Schlauchabschnitte 11 angeformt. Alternativ dazu können sie jedoch auch gesondert hergestellt und mit den Schlauchabschnitten 11 verbunden werden. Die Verbindungsstücke 12 werden von Bohrungen 14 durchsetzt, die hauptsächlich in Längsrichtung des Schalldämpfers verlaufen und deren Durchmesser deutlich geringer ist als der Innendurchmesser der Schlauchabschnitte 11, so dass Drosselstellen gebildet werden. Zusammengestzt ergeben die Schlauchabschnitte 11 einen Schlauch, der in seinem Inneren mehrere Kammern 15 aufweist, die hintereinander angeordnet und durch die Drosselstellen 14 voneinander getrennt sind. Dieser Schlauch ist ferner an einem Ende mit einem Schlauchabschnitt 16 versehen, der kein Verbindungsstück 12 aufweist, so dass der Schlauch an beiden Enden offen ist. Das eine Ende des Schlauches ist mit dem Luftversorgungsaggregat verbunden, während das andere Ende ins Freie führt (Fig. 1), so dass Luft, die vom Luftversorgungsaggregat aufgenommen oder abgegeben wird, durch den Schlauch hindurchgeführt wird.

Der Schalldämpfer gemäß Fig. 3 gleicht in seiner Wirkungsweise dem aus Fig. 2. Er ist jedoch nicht aus einzelnen Abschnitten zusammengesetzt, sondern besteht aus einem einzigen Schlauch 17 aus Gummi, der an seinem Innendurchmesser Vorsprünge 18 aufweist, die die Drosselstellen 14 bilden und einstückig in den Schlauch 17 übergehen. Zwischen den Drosselstellen 14 sind wiederum Kammern 15 ausgebildet. Ein derartiger Schalldämpfer kann z.B. durch Abformen in einr Form mit einem Kern für die Ausbildung der Strukturen im Inneren des Schlauches 17 hergestellt werden.

Bei Schalldämpfern gemäß den Fig 2 und 3 können die Kammern 15 etwa doppelt so lang sein wie die Drosselstellen 15 und der Innendurchmesser des Schlauches 17 bzw. der Schlauchabschnitte 11 und 16 etwa doppelt so groß wie der der Drosselstellen 14. Typische Abmessungen für ein Modell mit drei Drosselstellen aufwies sind z.B.: Gesamtlänge 200 mm, Länge der Kammern 40 mm, Durchmesser der Kammern 10 mm, Durchmesser der Drosselstellen 4,5 mm, Wandstärke des Schlauches 2 mm.

Bei dem in Fig. 4 dargestellten Ausführugsbeispiel sind zwei Schlauchabschnitte 19 und 20 parallel zueinander angeordnet. In ihre Enden sind Verbindungsstücke 21 und 22 eingesetzt. Die Anbindung des Schalldämpfer an das Luftversorgungsaggregat sowie sein Ausgang ins Freie erfolgt über Schlauchabschnitte 23 und 24, die ebenfalls auf die Verbindungsstücke 21 bzw. 22 aufgeschoben sind. Die Verbindungsstücke 21 und 22 weisen Kanäle zur Führung der Luft auf, die sich bei 26 verzweigen. Der Durchmesser der Kanäle 25 ist geringer als der Innendurchmesser der Schlauchabschnitte. Die Verbindungsstücke 21 und 22 wirken somit gleichzeitig als Drosselstellen. Die Schlauchabschnitte 19 und 20 bilden somit zwei Kammern 27 und 28, die parallel zueinander angeordnet sind. Die Schlauchabschnitte 19, 20, 23 und 24 bestehen aus Gummi, z.B. NBR oder einem Acrylat-Elastomer. Die Verbindungsstücke können aus Kunststoff, z.B. aus Polyamid bestehen.

Die Luft wird in dem Schalldämpfer von dem Schlauchabschnitt 23 oder 24 kommend in den Verzweigungen 26 in den Verbindugsstücken 21 bzw. 22 in zwei parallele Strömungen aufgeteilt, die in den Schlauchabschnitten 19 und 20 geführt und in dem zweiten Verbindungsstück 22 bzw. 21 wieder zusammengeführt wird. Der Schall breitet sich entlang der selben Wege aus. Bei der Verzweigung 26 im ersten Verbindungsstück 21 oder 22 wird der Schall in zwei Fronten aufgeteilt, die im zweiten Verbindungsstück 22 bzw. 21 überlagert werden und sich dabei teilweise gegenseitig auslöschen.

### Bezugszeichenliste (ist Teil der Beschreibung)

- 1: Kompressor
- 2: Motor
- 3: Schalldämpfer
- 4: Lufttrockner
- 5: Luftfeder
- 6, 7, 8: Elektromagnet-Ventile
- 9: Rückschlagventil
- 10: Elekronische Steuerung
- 11: Schlauchabschnitt
- 12: Verbindungsstück
- 13: Absatz
- 14: Drosselstelle
- 15: Kammer
- 16: Schlauchabschnitt
- 17: Schlauch
- 18: Vorsprung
- 19, 20: Schlauchabschnitte
- 21, 22: Verbindusgsstücke
- 23, 23: Schlauchabschnitte
- 25: Kanal
- 26: Verzweigung
- 27, 28: Kammern

## Patentansprüche

1. Luftversorgungsaggregat für ein Fahrzeug mit pneumatischen Einrichtungen, insb. mit Luftfedern, das einen Kompressor und einen Schalldämpfer enthält, **dadurch gekennzeichnet, dass** der Schalldämpfer (3) aus einem oder mehreren Schläuchen (11, 16, 17, 19, 20, 23, 24) aus Gummi oder einem gummiähnlichen Werkstoff besteht und durch Drosselstellen (14,25) in seinem Inneren in mehrere Kammern (15, 27, 28) unterteilt ist, wobei ein Ende des Schalldämpfers (3) mit dem Luftversorgungsaggregat verbunden ist, während das andere Ende des Schalldämpfers (3) ins Freie führt, und wobei die Luft sowohl bei der Aufnahme in das Luftversorgungsaggregat als auch bei der Abgabe in die Umgebung durch den Schlauch bzw. die Schläuche (11, 16, 17, 19, 20, 23, 24) hindurchgeführt wird.

2. Luftversorgungsaggregat nach Anspruch 1, **dadurch gekennzeichnet, dass** der Schalldämpfer aus einem Schlauch (17) oder mehreren hintereinander angeordneten Schlauchabschnitten (11, 17) besteht und die Kammern (15) in Reihe in Strömungsrichtung der Luft aufeinander folgend angeordnet sind.

3. Luftversorgungsaggregat nach Anspruch 1, **dadurch gekennzeichnet, dass** die Länge einer Kammer (15) ein ganzzahliges Vielfaches der Wellenlänge der am stärksten zu dämpfenden Komponente des Schalls beträgt.

4. Luftversorgungsaggregat nach Anspruch 1, **dadurch gekennzeichnet, dass** der Schalldämpfer (3) auf seinem mittleren Abschnitt mehrere, insb. zwei zueinander parallel verlaufende Schläuche (19, 20) aufweist.

5. Luftversorgungsaggregat nach Anspruch 1, **dadurch gekennzeichnet, dass** die Drosselstellen (14) einstückig in den Schlauch (17) übergehen.

6. Luftversorgungsaggregat nach Anspruch 1, **dadurch gekennzeichnet, dass** der Schalldämpfer (3) aus mehreren Schlauchabschnitten besteht, die durch Verbindungsstücke (12, 21,22) miteinander verbunden sind.

7. Luftversorgungsaggregat nach Anspruch 6, **dadurch gekennzeichnet, dass** die Drosselstellen (14, 25) durch Verbindungsstücke (12, 21, 22) gebildet sind, die geringere Innendurchmesser aufweisen als die Schläuche (11, 16, 19, 20 23, 24).

8. Luftversorgungsaggregat nach Anspruch 1, **dadurch gekennzeichnet, dass** der Schlauch oder die Schläuche (11, 16, 17, 19, 20, 23, 24) eine Shore-A-Härte von 60 - 80, vorzugsweise von etwa 75 aufweist bzw. aufweisen.

## Claims

1. Air supply unit for a vehicle having pneumatic devices, in particular having air springs, which supply unit contains a compressor and a sound damper, **characterized in that** the sound damper (3) is composed of one or more hoses (11, 16, 17, 19, 20, 23, 24) made of rubber or of a rubber-like material, and is divided by throttle points (14, 25) in its interior into a plurality of chambers (15, 27, 28), wherein one end of the sound damper (3) is connected to the air supply unit, while the other end of the sound damper (3) leads into the open air, and wherein the air is conducted through the hose or the hoses (11, 16, 17, 19, 20, 23, 24) both when it is taken into the air supply unit and when it is the output into the surroundings.

2. Air supply unit according to Claim 1, **characterized in that** the sound damper is composed of a hose (17) or of a plurality of hose sections (11, 17) which are arranged one behind the other and the chambers (15) are arranged one after the other in series in the direction of flow of the air.

3. Air supply unit according to Claim 1, **characterized in that** the length of a chamber (15) is an integral multiple of the wavelength of the component of the sound which is to be damped to the greatest degree.

4. Air supply unit according to Claim 1, **characterized in that** the sound damper (3) has, on its central section, a plurality of hoses (19, 20), in particular two hoses (19, 20) which extend parallel to one another.

5. Air supply unit according to Claim 1, **characterized in that** the throttle points (14) are continuous with the hose (17) in an integral fashion.

6. Air supply unit according to Claim 1, **characterized in that** the sound damper (3) is composed of a plurality of hose sections which are connected to one another by means of connecting pieces (12, 21, 22).

7. Air supply unit according to Claim 6, **characterized in that** the throttle points (14, 25) are formed by connecting pieces (12, 21, 22) which have a smaller internal diameter than the hoses (11, 16, 19, 20, 23, 24).

8. Air supply unit according to Claim 1, **characterized in that** the hose or the hoses (11, 16, 17, 19, 20, 23, 24) has/have a Shore A hardness of 60 - 80, preferably of approximately 75.

## Revendications

1. Unité d'alimentation en air pour un véhicule doté de dispositifs pneumatiques, en particulier d'amortisseurs pneumatiques, laquelle unité comprend un compresseur et un isolateur acoustique,
**caractérisée en ce que**
l'isolateur acoustique (3) est constitué d'un ou plusieurs tuyaux flexibles (11, 16, 17, 19, 20, 23, 24) en caoutchouc ou en un matériau similaire au caoutchouc et son espace intérieur est divisé en plusieurs chambres (15, 27, 28) par des étranglements (14, 25),
une extrémité de l'isolateur acoustique (3) est reliée à l'unité d'alimentation en air tandis que l'autre extrémité de l'isolateur acoustique (3) conduit à l'air libre, et
l'air s'écoule dans le ou les tuyaux flexibles (11, 16, 17, 19, 20, 23, 24) aussi bien lorsqu'il est introduit dans l'unité d'alimentation en air que lorsqu'il est dégagé dans l'environnement.

2. Unité d'alimentation en air selon la revendication 1, **caractérisée en ce que** l'isolateur acoustique est constitué d'un tuyau flexible (17) ou de plusieurs tronçons (11, 17) de tuyau flexible disposés les uns derrière les autres, les chambres (15) étant rangées successivement dans la direction d'écoulement de l'air.

3. Unité d'alimentation en air selon la revendication 1, **caractérisée en ce que** la longueur d'une chambre (15) représente un multiple entier de longueur d'onde de la composante du bruit qui doit être le plus fortement amortie.

4. Unité d'alimentation en air selon la revendication 1, **caractérisée en ce que** l'isolateur acoustique (3) présente sur son tronçon central plusieurs tuyaux flexibles (19, 20) et en particulier deux tuyaux flexibles qui s'étendent parallèlement l'un à l'autre.

5. Unité d'alimentation en air selon la revendication 1, **caractérisée en ce que** les étranglements (14) se prolongent d'un seul tenant dans le tuyau flexible (17).

6. Unité d'alimentation en air selon la revendication 1, **caractérisée en ce que** l'isolateur acoustique (3) est constitué de plusieurs tronçons de tuyaux flexibles qui sont reliés les uns aux autres par des pièces de raccordement (12, 21, 22).

7. Unité d'alimentation en air selon la revendication 6, **caractérisée en ce que** les étranglements (14, 25) sont formés par des pièces de raccordement (12, 21, 22) dont le diamètre intérieur est plus petit que celui des tuyaux flexibles (11, 16, 19, 20, 23, 24).

8. Unité d'alimentation en air selon la revendication 1, **caractérisée en ce que** le ou les tuyaux flexibles (11, 16, 17, 19, 20, 23, 24) ont une dureté Shore A de 60 à 80 et de préférence d'environ 75.
